(19) Europäisches Patentamt
European Patent Office
Office européen des brevets

(11) EP 4 349 461 A1

(12) EUROPEAN PATENT APPLICATION
published in accordance with Art. 153(4) EPC

(43) Date of publication:
10.04.2024 Bulletin 2024/15

(51) International Patent Classification (IPC):
B01D 61/18 (2006.01)        B01D 69/00 (2006.01)
B01D 69/02 (2006.01)        B01D 69/10 (2006.01)
B01D 69/12 (2006.01)        B01D 71/34 (2006.01)
C02F 3/12 (2006.01)         C02F 1/44 (2006.01)

(21) Application number: 22811113.4

(22) Date of filing: 26.04.2022

(52) Cooperative Patent Classification (CPC):
B01D 61/18; B01D 69/00; B01D 69/02;
B01D 69/10; B01D 69/12; B01D 71/34; C02F 1/44;
C02F 3/12

(86) International application number:
PCT/JP2022/018864

(87) International publication number:
WO 2022/249839 (01.12.2022 Gazette 2022/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.05.2021 JP 2021089042

(71) Applicant: Toray Industries, Inc.
Tokyo 103-8666 (JP)

(72) Inventors:
• KATO, Satoshi
Otsu-shi, Shiga 520-8558 (JP)
• NISHIGUCHI, Yoshiki
Otsu-shi, Shiga 520-8558 (JP)

(74) Representative: Hoefer & Partner Patentanwälte
mbB
Pilgersheimer Straße 20
81543 München (DE)

(54) SEPARATION MEMBRANE AND METHOD FOR PRODUCING SAME

(57)   In order to provide a separation membrane excellent in the low fouling property, separation performance, and water permeability and having high chemical resistance, a separation membrane includes a porous resin layer containing a polymer containing a polyvinylidene fluoride-based resin as a main component, in which in the porous resin layer, a number A of pores having a surface pore diameter of 0.01 um or more and less than 0.05 um and a number B of pores having a surface pore diameter of 0.05 um or more have a relationship of $2.0 \leq A/B \leq 15.0$, and a porosity defined by macrovoids having a minor axis of 10 um or more in a region within 15 um from a surface of the porous resin layer is 15% or more and 80% or less.

【Fig.1】

**Description**

TECHNICAL FIELD

The present invention relates to a separation membrane and a manufacturing method therefor.

BACKGROUND ART

In recent years, separation membranes such as microfiltration membranes and ultrafiltration membranes are used in various fields such as water treatment fields such as water purification and wastewater treatment, medical fields such as blood purification, and food industry fields.

When the water permeability of the separation membrane that is variously used as described above is lowered due to deposition, adhesion, clogging (fouling), or the like of a substance to be separated, operation stability may be impaired. In this case, it is necessary to increase the amount of aeration in the aeration cleaning or increase the frequency of chemical cleaning, which leads to an increase in operating cost, and thus a low-fouling separation membrane having high water permeability is required. In addition, in the water purification treatment, for the purpose of sterilizing permeated water and preventing biofouling of the membrane, a microbicide such as sodium hypochlorite is added to the membrane module portion, or the membrane itself is washed with an acid, an alkali, chlorine, a surfactant, or the like. Therefore, the separation membrane is required to have chemical durability (chemical resistance). Furthermore, in tap water production, accidents have become apparent since the 1990's that pathogenic microorganisms resistant to chlorine such as Cryptosporidium derived from livestock excrement or the like cannot be completely treated in a water purification plant and are mixed into treated water. In order to prevent such an accident, the separation membrane is required to have sufficient separation characteristics and high physical durability so that raw water is not mixed into the treated water.

In addition, treated water of a separation membrane such as a microfiltration membrane and an ultrafiltration membrane may be used as industrial water, drinking water, or the like by being treated with a reverse osmosis membrane or a nanofiltration membrane. At this time, the treated water of a separation membrane such as a microfiltration membrane and an ultrafiltration membrane has a high biopolymer concentration, and when the treated water is used as water to be treated with a reverse osmosis membrane or a nanofiltration membrane, fouling due to adhesion of the biopolymer may occur, and the operation stability may be impaired.

As a separation membrane exhibiting excellent chemical resistance, a separation membrane containing a polymer containing a polyvinylidene fluoride-based resin is known. For example, Patent Document 1 discloses a technique for controlling the pore size distribution of a separation membrane made of a polymer containing a polyvinylidene fluoride-based resin to improve the low fouling property and the separation performance. In addition, Patent Document 2 discloses a technique in which a long-chain branched fluoropolymer is selected as a polyvinylidene fluoride-based resin contained in a separation membrane to increase the pore diameter of the separation membrane and improve water permeability.

PRIOR ART DOCUMENT

PATENT DOCUMENTS

Patent Document 1: Japanese Patent No. 5310658
Patent Document 2: Japanese Translation of PCT International Application Publication No. 2016-510688

SUMMARY OF THE INVENTION

PROBLEMS TO BE SOLVED BY THE INVENTION

However, in a conventional separation membrane made of a polymer containing a polyvinylidene fluoride-based resin for the purpose of improving water permeability as well as a low fouling property, it has been regarded as a problem that both performances having a trade-off relationship cannot be sufficiently achieved, and either one is sacrificed. In addition, separation performance and water permeability are also in a trade-off relationship, and it has been regarded as a problem that one of them is sacrificed.

Therefore, an object of the present invention is to provide a separation membrane that is excellent in low fouling property, separation performance, and water permeability and has high chemical resistance.

SOLUTIONS TO THE PROBLEMS

In order to solve the above-described problems, the present invention is characterized by the following (1) to (15) .

(1) A separation membrane including a porous resin layer containing a polymer containing a polyvinylidene fluoride-based resin as a main component, in which in the porous resin layer, a number A of pores having a surface pore diameter of 0.01 um or more and less than 0.05 um and a number B of pores having a surface pore diameter of 0.05 um or more have a relationship of $2.0 \leq A/B \leq 15.0$, and a porosity defined by macrovoids having a minor axis of 10 um or more in a region within 15 um from a surface of the porous resin layer is 15% or more and 80% or less.
(2) The separation membrane according to (1), in which the number A and the number B have a relationship of $A/B \geq 2.5$.
(3) The separation membrane according to (2), in which the number B is less than 40 pores/$\mu m^2$.
(4) The separation membrane according to any one of (1) to (3), in which a porosity defined by the macrovoids in the region within 15 um from the surface of the porous resin layer is 25% or more.
(5) The separation membrane according to any one of (1) to (4), in which in the porous resin layer, an area C occupied by pores having a surface pore diameter of 0.01 um or more and less than 0.05 um and an area D occupied by pores having a surface pore diameter of 0.05 um or more have a relationship of $C/D \geq 0.6$.
(6) The separation membrane according to (5), in which the area C and the area D have a relationship of $C/D \geq 0.8$.
(7) The separation membrane according to (6), in which the area D is less than 0.025 $\mu m^2$-pores/$\mu m^2$-membrane.
(8) The separation membrane according to any one of (1) to (7), in which a macrovoid having a minor axis of 50 um or more is present in the porous resin layer.
(9) The separation membrane according to any one of (1) to (8), including: the porous resin layer; and a support.
(10) A method for manufacturing the separation membrane according to any one of (1) to (9), the method including: (i) a polymer solution adjusting step of using a polymer containing a polyvinylidene fluoride-based resin as a main component, glycerin, a pore opening agent, and a solvent and dissolving the polymer containing a polyvinylidene fluoride-based resin as a main component to provide a polymer solution; and (ii) a porous resin layer forming step of coagulating the polymer solution in a coagulation bath containing a non-solvent to form a porous resin layer.
(11) A method for manufacturing the separation membrane according to any one of (1) to (9), the method including: (i) a polymer solution adjusting step of using a polymer containing a polyvinylidene fluoride-based resin as a main component, a non-solvent, a pore opening agent being a surfactant with a mole number of ethylene oxide added of 30 or more, and a solvent and dissolving the polymer containing a polyvinylidene fluoride-based resin as a main component to provide a polymer solution; and (ii) a porous resin layer forming step of coagulating the polymer solution in a coagulation bath containing a non-solvent to form a porous resin layer.
(12) A method for manufacturing the separation membrane according to any one of (1) to (9), the method including: (i) a polymer solution adjusting step of using a polymer containing a polyvinylidene fluoride-based resin as a main component, an alcohol, a pore opening agent, and a solvent and dissolving the polymer containing a polyvinylidene fluoride-based resin as a main component to provide a polymer solution; and (ii) a porous resin layer forming step of coagulating the polymer solution in a coagulation bath containing a non-solvent to form a porous resin layer, in which as the polymer containing a polyvinylidene fluoride-based resin as a main component, a polymer having a value a of 0.27 to 0.39 and a value b of 0.22 to 0.60, the values a and b being determined by approximation by Formula 1 below from a radius of gyration $<S^2>^{1/2}$ and an absolute molecular weight $M_w$ of the polymer measured by gel permeation chromatography with multi-angle light scattering (GPC-MALS), is used.

$$<S^2>^{1/2} = bM_w{}^a \quad \dots \quad (Formula\ 1)$$

EFFECTS OF THE INVENTION

According to the present invention, it is possible to provide a separation membrane excellent in low fouling property, separation performance, and water permeability while ensuring high chemical resistance by including a polymer containing a polyvinylidene fluoride-based resin as a main component.

BRIEF DESCRIPTION OF THE DRAWING

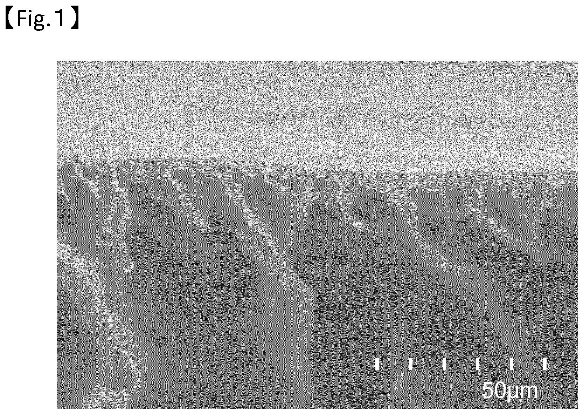

Fig. 1 is an enlarged image of a separation membrane illustrating a "three-dimensional network structure".

EMBODIMENTS OF THE INVENTION

Hereinafter, embodiments of the present invention will be described in detail with reference to the drawings, but the present invention is not limited thereto at all. In the present specification, the mass-based proportion (percentage, part, etc.) is the same as the weight-based proportion (percentage, part, etc.).

(Separation Membrane)

The separation membrane of the present invention is required to include a porous resin layer made of a polymer (hereinafter may be referred to as a "specific polymer") containing a polyvinylidene fluoride-based resin as a main component.

The polyvinylidene fluoride-based resin refers to a vinylidene fluoride homopolymer or a vinylidene fluoride copolymer. Here, the vinylidene fluoride copolymer refers to a polymer having a vinylidene fluoride residue structure and is typically a copolymer of a vinylidene fluoride monomer and another fluorine-based monomer or the like. Examples of such a fluorine-based monomer include vinyl fluoride, tetrafluoroethylene, hexafluoropropylene, and chlorotrifluoroethylene. The vinylidene fluoride copolymer may be copolymerized with ethylene or the like other than the fluorine-based monomer to such an extent that the effect of the present invention is not impaired.

The weight average molecular weight of the polyvinylidene fluoride-based resin is preferably 50,000 to 1,000,000 because if it is too large, the water permeability of the separation membrane decreases, and if it is too small, the low fouling property of the separation membrane decreases. When the separation membrane is subjected to a water treatment application exposed to chemical cleaning, the weight average molecular weight is preferably 100,000 or more, more preferably 150,000 or more. The weight average molecular weight is preferably 900,000 or less, more preferably 800,000 or less.

In the present invention, the phrase "containing a polyvinylidene fluoride-based resin as a main component" means that the ratio of the polyvinylidene fluoride-based resin in the polymer constituting the porous resin layer is 50 mass% or more. The ratio is preferably 55 mass% or more, more preferably 60 mass% or more, in order to ensure high chemical resistance. Examples of the accessory component other than the polyvinylidene fluoride-based resin include, but are not limited to, an acrylic resin that controls hydrophilicity of the porous resin layer.

In the separation membrane of the present invention, at least one surface layer is constituted of the porous resin layer in order to exhibit an excellent low fouling property and separation performance; in the porous resin layer, it is necessary that the number A of pores having a surface pore diameter of 0.01 um or more and less than 0.05 um and the number B of pores having a surface pore diameter of 0.05 um or more have a relationship of $A/B \geq 2.0$. That is, it means that pores having large diameters and pores having small diameters are mixed at a certain ratio on one surface of the porous resin layer. The value of A/B is preferably 2.5 or more, more preferably 3.0 or more. The surface pore diameter herein refers to a pore diameter in a surface to be a surface of the separation membrane.

On the other hand, the separation membrane of the present invention preferably has a relationship of $A/B \leq 15.0$ in order to exhibit excellent water permeability. The value of A/B is more preferably 12.0 or less, still more preferably 10.0 or less, most preferably 8.0 or less.

In order to increase the removal rate of biopolymers, the number B is preferably less than 40 pores/$\mu$m$^2$.

The surface pore diameter of the porous resin layer is measured as follows.

The surface of the porous resin layer is observed with a scanning electron microscope (hereinafter referred to as a SEM) at a magnification of 10,000 times, and from the area of each pore, the diameter when assuming that the pore is a circle is calculated as the pore diameter, which can be used as the pore diameter of each pore.

The separation membrane of the present invention is required to have a porosity defined by macrovoids of 15% or more in a region within 15 um from the surface of the porous resin layer constituting the surface layer of the separation membrane in order to reduce flow resistance when permeated water flows through the porous resin layer and to exhibit high water permeability. Here, the macrovoid in the present invention is a large void having a minor axis of 10 um or more present in the porous resin layer, and hereinafter, a void simply referred to as the "macrovoid" refers to such a void. The minor axis is a pore diameter measured in a direction parallel to the surface of the porous resin layer.

In the present invention, the porosity defined by such macrovoids in a region within 15 um from the surface of the porous resin layer is preferably 25% or more. In addition, from the viewpoint of the strength of the porous resin layer, the porosity defined by such macrovoids in a region within 15 um from the surface of the porous resin layer is required to be 80% or less and is preferably 50% or less.

In order for the separation membrane of the present invention to exhibit an excellent low fouling property and separation performance, in the porous resin layer, an area C occupied by pores having a surface pore diameter of 0.01 um or more and less than 0.05 um and an area D occupied by pores having a surface pore diameter of 0.05 um or more preferably have a relationship of $C/D \geq 0.6$, more preferably a relationship of $C/D \geq 0.8$. In addition, in order to exhibit excellent water permeability, a relationship of $C/D \leq 5.0$ is required. The value of C/D is preferably 4.0 or less, more preferably 3.0 or less.

In order to increase the removal rate of biopolymers, the area D is preferably less than 0.025 $\mu m^2$-pores/$\mu m^2$-membrane.

In the separation membrane of the present invention, in order to reduce the flow resistance when the permeated water flows through the porous resin layer, it is preferable that macrovoids having a minor axis of 50 um or more exist in the porous resin layer. On the other hand, from the viewpoint of the strength of the porous resin layer, the size of the macrovoid is preferably limited to 300 um or less in terms of minor axis. As described above, the minor axis is a pore diameter measured in a direction parallel to the surface of the porous resin layer.

In order to reduce the flow resistance when the permeated water flows through the porous resin layer, the ratio of the minor axis of the macrovoid present in the porous resin layer to the average pore diameter on the surface of the porous resin layer is preferably 700 or more, more preferably 1,000 or more.

Here, the size of the macrovoid present in the porous resin layer can be determined by observing a cross section in a direction perpendicular to the surface of the porous resin layer with a SEM.

The porosity defined by the macrovoids can be determined by using a confocal laser microscope, placing a porous resin layer dyed with a fluorescent substance so that the axial direction of laser light is perpendicular to the surface of the porous resin layer, observing a range of 200 um × 200 um as a plane parallel to the surface in a region of 40 um from the surface every 0.2 um, and extracting a cross-sectional image in a direction perpendicular to the surface of the porous resin layer from a three-dimensional image obtained by joining the obtained images.

Among the polyvinylidene fluoride-based resins, the separation membrane of the present invention is preferably configured using a branched polyvinylidene fluoride-based resin, and it is more preferable to use a polyvinylidene fluoride-based resin having a value a of 0.27 to 0.39 and a value b of 0.22 to 0.60 for the polymer (specific polymer) determined from the relationship of Formula 1 below.

$$\langle S^2 \rangle^{1/2} = bM_w{}^a \quad \cdots \quad (\text{Formula 1})$$

Here, $\langle S^2 \rangle^{1/2}$ means the radius of gyration of the polymer, and $M_w$ means the absolute molecular weight. By using a highly branched polyvinylidene fluoride-based resin, the above-described ranges of the values a and b can be satisfied.

When the value a is 0.39 or less, the radius of gyration $\langle S^2 \rangle^{1/2}$ is appropriately small with respect to the absolute molecular weight $M_w$ of the specific polymer, and the specific polymer easily moves to the surface layer of the porous resin layer when the porous resin layer is formed. It is presumed that this increases the polymer density in the surface layer of the porous resin layer and that the separation membrane (porous resin layer) exhibits excellent separation performance. On the other hand, when the value a is 0.27 or more, $\langle S^2 \rangle^{1/2}$ with respect to $M_w$ increases to an appropriate extent, and the specific polymers tend to be entangled with each other to an appropriate extent. As a result, it is presumed that the polymer density in the surface layer becomes homogeneous, and higher separation performance is exhibited. Furthermore, since the polymer density in the inner layer decreases as the polymer density in the surface layer of the porous resin layer increases, it is presumed that high water permeability is exhibited simultaneously with excellent separation performance. The value a is more preferably 0.29 or more. The value a is more preferably 0.33 or less, still more preferably 0.32 or less.

The value b for the specific polymer is preferably 0.22 to 0.60 in order to further enhance the low fouling property by homogenization of the polymer density in the surface layer due to entanglement between the specific polymers. The value b is more preferably 0.43 or more. The value b is more preferably 0.50 or less.

The values a and b above can be determined on the basis of the relationship between the radius of gyration $\langle S^2 \rangle^{1/2}$ and the absolute molecular weight $M_w$, measured by GPC-MALS, which is a gel permeation chromatograph (hereinafter referred to as a "GPC") equipped with a multi-angle light scattering detector (hereinafter referred to as a "MALS") and a differential refractometer (hereinafter referred to as an "RI"). The measurement with the GPC-MALS is performed by dissolving the polymer constituting the porous resin layer in a solvent. A salt may be added to the solvent in order to improve the solubility of the polymer. When the polyvinylidene fluoride-based resin is measured by GPC-MALS, N-methyl-2-pyrrolidone (hereinafter referred to as "NMP") to which 0.1 mol/L of lithium chloride is added is preferably used as the solvent.

The above values a and b can be determined by approximating the relationship between the radius of gyration $\langle S^2 \rangle^{1/2}$ and the absolute molecular weight $M_w$ measured by GPC-MALS as in Formula 1 below by a method commonly used in polymer research called a conformation plot. Such a technique is common as described, for example, in "Size Exclusion Chromatography" (Sadao Mori, Kyoritsu Shuppan Co., Ltd., first edition, 1992). Note that the approximation of the conformation plot may be performed by linear approximation using Formula 1 on a log-log graph and applying the least squares method within the measurement range of the detector.

$$<S^2>^{1/2} = bM_w{}^a \quad \dots \quad (\text{Formula 1})$$

For easily adjusting the value for the specific polymer to the range of 0.27 to 0.39, the ratio of the branched polyvinylidene fluoride-based resin in the polyvinylidene fluoride-based resin in the present invention is preferably 10 to 100 mass%, more preferably 25 to 100 mass%.

In addition, in order to easily adjust the value a to the range of 0.27 to 0.39, the weight average molecular weight of the branched polyvinylidene fluoride-based resin is preferably 50,000 to 1,000,000, more preferably 100,000 to 900,000, still more preferably 150,000 to 800,000.

Here, the "branched polyvinylidene fluoride-based resin" refers to a polyvinylidene fluoride-based resin in which the value a is 0.41 or less.

The porous resin layer in the present invention preferably has a three-dimensional network structure in order to further enhance the separation performance by homogenization of the polymer density in the surface layer due to entanglement between the specific polymers. Here, the "three-dimensional network structure" refers to a structure in which the polymer constituting the porous resin layer three-dimensionally spreads in a network shape as shown in Fig. 1. The three-dimensional network structure has pores and voids partitioned by the polymer forming the network.

The separation membrane of the present invention preferably includes the porous resin layer as described above and another layer.

The other layer is not particularly limited as long as it is a component capable of overlapping the porous resin layer and forming a layer. The other layer is preferably a support. Here, the "support" is intended to provide strength to the separation membrane by supporting the porous resin layer. The material of the support is not particularly limited, such as organic materials, inorganic materials, and the like, but organic fibers are preferable from the viewpoint of easy weight reduction. The material is more preferably a woven fabric or a nonwoven fabric made of organic fibers such as cellulose fibers, cellulose triacetate fibers, polyester fibers, polypropylene fibers, and polyethylene fibers. Among them, the material is preferably a nonwoven fabric, which is relatively easily controlled in density, is easily manufactured, and is inexpensive.

When the thickness of the support is too thin, it is difficult to maintain the strength as the separation membrane, and when the thickness is extremely thick, the water permeability tends to be reduced, so that the thickness is preferably in the range of 50 um to 1 mm. The thickness of the support is most preferably in the range of 70 to 500 $\mu$m.

In the present invention, the thickness of the porous resin layer is preferably 50 um or more, more preferably 80 um or more, still more preferably 100 um or more. The thickness of the porous resin layer is preferably 500 um or less, more preferably 300 um or less, still more preferably 200 um or less. When the porous resin layer is too thin, the support is exposed, so that a dirt component adheres to the support to increase the filtration pressure, or the filtration performance may not be sufficiently recovered even after cleaning. In addition, when the porous resin layer is too thick, the water permeation amount may be reduced.

It is preferable that a part of the resin constituting the porous resin layer enters at least the surface layer portion of the support to form a composite layer with the support in at least the surface layer portion. When the resin enters the support, the porous resin layer is firmly fixed to the support by what is called the anchor effect, and the porous resin layer can be prevented from peeling off from the support.

In the separation membrane of the present invention, the pure water permeability at 25°C and 5 kPa is preferably 0.15 $m^3/m^2$/hr or more, more preferably 0.5 $m^3/m^2$/hr or more, from the viewpoint that the operating pressure can be lowered and that the progress of fouling can be suppressed.

(Method for Manufacturing Separation Membrane)

The separation membrane of the present invention described above can be typically produced by a method as described below.

The separation membrane of the present invention can be manufactured, for example, by a method including the following steps (i) and (ii).

(i) A polymer solution adjusting step of using a polymer containing a polyvinylidene fluoride-based resin as a main component, a non-solvent, a pore opening agent, and a solvent and dissolving the polymer containing a polyvinylidene fluoride-based resin as a main component to provide a polymer solution.

(ii) A porous resin layer forming step of coagulating the polymer solution in a coagulation bath containing a non-solvent to form a porous resin layer.

In addition, for the separation membrane of the present invention, examples of the manufacturing method using a support as the other layer include the steps (i) and (ii) above in which the porous resin layer is formed on at least one surface of the support in the porous resin layer forming step (ii).

That is, first, a film of a stock solution (polymer solution) containing the above-described resin (polymer containing a polyvinylidene fluoride-based resin as a main component), the non-solvent, the pore opening agent, and the solvent is formed on the surface of the above-described support while the support is impregnated with the stock solution. Thereafter, the support is immersed in the coagulation bath containing the non-solvent to coagulate the resin, and the porous resin layer is formed on the surface of the support. It is also preferable that the stock solution further contains a non-solvent. The temperature of the stock solution is usually preferably selected within the range of 15 to 120°C from the viewpoint of film formability.

The density of the support is preferably 0.7 g/cm³ or less, more preferably 0.6 g/cm³ or less. When the density of the support is within this range, it is suitable for receiving the resin constituting the porous resin layer and forming an appropriate composite layer of the support and the resin. However, when the density is extremely low, the strength as the separation membrane tends to be reduced, and thus the density of the support is preferably 0.3 g/cm³ or more. The density referred to herein is an apparent density and can be determined from the area, thickness, and weight of the support.

The non-solvent is a liquid that does not dissolve the resin. The non-solvent in the step (i) acts to control the coagulation rate of the resin to control the pore size. As the non-solvent in the step (i), when a polyvinylidene fluoride-based resin having a value a of 0.27 to 0.39 and a value b of 0.22 to 0.60 as determined from the relationship of Formula 1 is used as the specific polymer, an alcohol such as methanol and ethanol can be used. Among them, a lower alcohol having 5 or less carbon atoms is preferable in order to set the value of A/B to 2.0 or more and to exhibit excellent low fouling property and separation performance. It is also preferable to use glycerin regardless of the type of the specific polymer.

The pore opening agent has a property of being extracted at the time of immersion in the coagulation bath and making the resin layer porous. The pore opening agent preferably has high solubility in the coagulation bath. For example, an inorganic salt such as calcium chloride and calcium carbonate can be used. In addition, polyoxyalkylenes such as polyethylene glycol (PEG) and polypropylene glycol, water-soluble polymers such as polyvinyl alcohol, polyvinyl butyral, and polyacrylic acid, glycerin, a surfactant, and the like can be used. The pore opening agent can be arbitrarily selected, but a polymer containing PEG as a main component or a surfactant is preferable. Among them, as the pore opening agent, it is particularly preferable to use a polymer containing PEG having a weight average molecular weight of 10,000 or more and 50,000 or less as a main component, or a surfactant having a polyoxyalkylene structure, a fatty acid ester structure, and a hydroxy group. By using these as a pore opening agent, the porosity defined by the macrovoids tends to be 15% or more in the region within 15 um from the surface of the porous resin layer. Here, the phrase "containing as a main component" means that the pore opening agent component contains 50 wt% or more of the component of interest.

Examples of the surfactant having a polyoxyalkylene structure, a fatty acid ester structure, and a hydroxy group include polyethylene glycol monooleate, polyethylene glycol monostearate, polyoxyethylene sorbitan monolaurate (Tween 20), polyoxyethylene sorbitan monostearate (Tween 60), and polyoxyethylene sorbitan monooleate (Tween 80). In order to set the value of A/B to 2.0 or more and exhibit an excellent low fouling property and separation performance, it is preferable to use a surfactant having a mole number of ethylene oxide added of 30 or more, and it is more preferable to use a surfactant having a mole number of ethylene oxide added of 40 or more.

The solvent dissolves the resin. The solvent acts on the resin and the pore opening agent to promote formation of the porous resin layer by the resin and the pore opening agent. As the solvent, NMP, N,N-dimethylacetamide (DMAc), N,N-dimethylformamide (DMF), dimethyl sulfoxide (DMSO), acetone, methyl ethyl ketone, or the like can be used. Among them, NMP, DMAc, DMF, and DMSO having high solubility of resin can be preferably used.

The non-solvent in the step (ii) acts to control the coagulation rate of the resin to control the sizes of the pores and macrovoids. As the non-solvent, for example, water or an alcohol such as methanol and ethanol can be used. Among them, water is preferable as the non-solvent from the viewpoint of ease of wastewater treatment and price. The non-solvent may be a mixture containing them.

In the polymer solution adjusting step, it is preferable to use the polymer containing a polyvinylidene fluoride-based resin as a main component, the non-solvent, the pore opening agent, and the solvent and dissolve the polymer containing a polyvinylidene fluoride-based resin as a main component to provide the polymer solution (stock solution). In the stock solution, the content of the resin is preferably in the range of 5 to 30 wt%, the content of the pore opening agent is preferably in the range of 0.1 to 15 wt%, the content of the solvent is preferably in the range of 40 to 94.4 wt%, and the content of the non-solvent is preferably in the range of 0.5 to 20 wt%. When the amount of the resin is extremely small, the strength of the separation membrane (porous resin layer) may be reduced, and when the amount is excessively large, the water permeability may be reduced. The resin content in the stock solution is more preferably in the range of 8 to 20 wt%. When the content of the pore opening agent is too small, the water permeability may decrease, and when the amount is too large, the strength of the separation membrane (porous resin layer) may decrease. When the content is extremely large, the pore opening agent remains in the porous resin layer and is eluted during use, so that the water quality of the permeated water may deteriorate or the water permeability may fluctuate. The content of the pore opening agent in the stock solution is more preferably 0.5 to 10 wt%. Furthermore, when the content of the solvent is too small, the stock solution tends to gel, and when the content is too large, the strength of the separation membrane (porous resin layer) may be reduced. The solvent content in the stock solution is more preferably in the range of 60 to 90 wt%. When the ratio of the non-solvent in the stock solution is too large, gelation of the stock solution is likely to occur, and thus the content of the non-solvent is preferably in the range of 0.5 to 20 wt% in the stock solution. More preferably, the content is in the range of 0.5 to 15 wt%.

In the porous resin layer forming step, it is preferable to coagulate the polymer solution (stock solution) in a coagulation bath containing the non-solvent to form the porous resin layer. As the coagulation bath, the non-solvent or a mixed solution containing the non-solvent and a solvent can be used. In the coagulation bath, the content of the non-solvent is preferably at least 80 wt%. If the content is too small, the coagulation rate of the resin becomes slow, the pore diameter on the surface becomes large, and macrovoids are hardly formed. More preferably, the content is in the range of 85 to 100 wt%. Incidentally, when the temperature of the coagulation bath is too high, the coagulation rate becomes too fast. Conversely, when the temperature is too low, the coagulation rate becomes too slow. It is thus usually preferable to select the temperature within the range of 15 to 80°C. A more preferable temperature range is 20 to 60°C.

When a separation membrane in which the other layer is the support is formed, it is preferable to form the porous resin layer on at least one surface of the support in the porous resin layer forming step. The film of the stock solution on the support can be formed by applying the stock solution to the support or by immersing the support in the stock solution. When the stock solution is applied, the stock solution may be applied to one surface or both surfaces of the support. At this time, depending on the composition of the stock solution, it is preferable to use a support having a density of 0.7 g/cm$^3$ or less because the support is moderately impregnated with the stock solution.

It is preferable to provide a cleaning step for removing the solvent and the pore opening agent after the porous resin layer forming step. The cleaning method can be appropriately selected according to the types of the solvent and the pore opening agent and is not particularly limited, and examples thereof include a method of immersing the product in hot water at 60 to 100°C for 1 to 10 minutes.

The shape of the separation membrane to be manufactured can be controlled by the mode of coagulation of the polymer solution in the porous resin layer forming step. In the case of manufacturing a flat sheet-type separation membrane, for example, a film-like support made of a nonwoven fabric, a metal oxide, a metal, or the like coated with the polymer solution can be immersed in the coagulation bath.

In the case of manufacturing a hollow fiber-type separation membrane, the polymer solution can be discharged from the outer peripheral portion of the double tube spinneret, and a core liquid can be discharged from the central portion, into the coagulation bath containing the non-solvent at the same time. As the core liquid, a good solvent or the like in the polymer solution preparation step is preferably used. In addition, the separation membrane may be formed on the surface of a hollow fiber support made of a polymer, a metal oxide, a metal, or the like. Examples of the method for forming the separation membrane on the surface of the hollow fiber support made of a polymer include a method in which a solution as a raw material of the hollow fiber support and the polymer solution are simultaneously discharged using a triple tube spinneret, and a method in which a product obtained by applying the polymer solution to the outer surface of a hollow fiber support formed into a membrane in advance is passed through the non-solvent in the coagulation bath.

The separation membrane of the present invention can be applied to either an ultrafiltration membrane or a microfiltration membrane. The water to be treated with the separation membrane of the present invention is not particularly limited, but the separation membrane is suitably used for separation of activated sludge that contains suspended matter of relatively large particles and is used for biologically treating sewage or wastewater.

The treated water of the separation membrane of the present invention is suitably used as water to be treated with a reverse osmosis membrane or a nanofiltration membrane. Since the separation membrane of the present invention exhibits high separation performance, the treated water of the separation membrane of the present invention has a low biopolymer concentration, and when used as water to be treated with a reverse osmosis membrane or a nanofiltration membrane, fouling due to adhesion of biopolymers can be suppressed.

EXAMPLES

Hereinafter, the present invention will be described specifically with reference to examples, but the present invention is not limited to these examples at all.

(i) Surface Pore Diameter, Number of Pores, and Area Occupied by Pores of Porous Resin Layer

Using a SEM (manufactured by Hitachi High-Tech Corporation; S-5500), the surface of the porous resin layer of the separation membrane was observed under the following observation conditions, and the area of each pore in the observation field was measured. From the area of each pore, the diameter when the pore was assumed to be a circle was calculated as a pore diameter. The number of pores having a pore diameter of 0.01 um or more and less than 0.05 um was divided by the area of the observation field to calculate the number A of pores having a pore diameter of 0.01 um or more and less than 0.05 um per unit area, and the number of pores having a pore diameter of 0.05 um or more was divided by the area of the observation field to calculate the number B of pores having a pore diameter of 0.05 um or more per unit area. In addition, the area occupied by pores having a pore diameter of 0.01 um or more and less than 0.05 um was divided by the area of the observation field to calculate the area C occupied by the pores having a pore diameter of 0.01 um or more and less than 0.05 um per unit area, and the area occupied by pores having a pore diameter of 0.05 um or more was divided by the area of the observation field to calculate the area D occupied by the pores having a pore diameter of 0.05 um or more per unit area.

Acceleration voltage: 5 kV
Observation magnification: 30,000 times
Observation field: 4.233 um × 3.175 um
Image processing software: ImageJ (Wayne Rasband, National Institutes of Health)

Note that measurement was performed for 10 arbitrary fields of view, the number A of pores, the number B of pores, the area C occupied by the pores, and the area D occupied by the pores were calculated for each field of view, and the respective average values were defined as the number A of pores, the number B of pores, the area C occupied by the pores, and the area D occupied by the pores.

(ii) Minor Axis of Macrovoid in Porous Resin Layer

A sample for cross-section measurement was prepared by subjecting the separation membrane to an ultrathin frozen sectioning, and using a SEM (manufactured by Hitachi High-Tech Corporation; S-5500), the minor axis of the macrovoid was calculated from the size of the macrovoid observed under the following observation conditions.
Acceleration voltage: 5 kV
Observation magnification: 500 times
Observation region: 256 um × 192 um

Note that measurement was performed for 10 arbitrary fields of view, the minor axes of the observed macrovoids were measured, and the average value was taken as the minor axis of the macrovoids in the porous resin layer.

(iii) Porosity Defined by Macrovoids in Region within 15 um from Surface of Porous Resin Layer

The separation membrane was stained with a fluorescent substance (3,3,3',3'-tetramethyl-1,1'-bis(4-sulfobutyl)indocarbocyanine sodium) and placed using a confocal laser microscope (manufactured by Olympus Corporation; FV3000) such that the surface of the porous resin layer was perpendicular to the axial direction of the laser beam, and a range of 200 um × 200 um as a plane parallel to the surface in a region up to 40 um from the surface were observed every 0.2 um. A cross-sectional image in a direction perpendicular to the surface of the porous resin layer was extracted from a three-dimensional image obtained by joining the obtained images, and an area S1 of the region up to 15 um from the surface was calculated. The observed cross-sectional image was binarized into a structural portion made of the resin and a pore portion, and an area S2 of macrovoids in the region within 15 um from the surface of the porous resin layer was calculated. The porosity (%) was calculated from Formula 2 below.

$$(Porosity) = S2/S1 \times 100 \quad ... \quad (Formula\ 2)$$

Any five images were measured, and the average value thereof was taken as the porosity.

(iv) Value a and Value b for Polymer (Specific Polymer) Constituting Porous Resin Layer

The separation membrane immersed in distilled water was frozen at -20°C using a cryostat (manufactured by Leica Camera AG; Jung CM3000), and a section of the separation membrane was collected and vacuum-dried at 25°C overnight. To 5 mg of the separation membrane after vacuum drying, 5 mL of NMP containing 0.1 M lithium chloride was added, and the mixture was stirred at 50°C for about 2 hours. The obtained polymer solution was injected into a GPC-MALS (2 Shodex KF-806M columns measuring φ8.0 mm × 30 cm manufactured by Showa Denko K.K. connected in series, differential refractometer: manufactured by Wyatt Technology Corporation; Optilab rEX, MALS: manufactured by Wyatt Technology Corporation; DAWN HeLEOS) under the following conditions, and measurement was performed. The injected polymer solution was eluted from the column in the range of 27 to 43 minutes.

Column temperature: 50°C
Temperature of detector: 23°C
Solvent: NMP containing 0.1 M of lithium chloride
Flow rate: 0.5 mL/min
Injection amount: 0.3 mL

From a polymer concentration $c_i$ at an elution time $t_i$ obtained from the RI and an excess Rayleigh ratio $R_{\theta i}$ at the elution time $t_i$ obtained from the MALS, $\sin^2(\theta/2)$ and $(K \times c_i/R_{\theta i})^{1/2}$ were plotted (Berry plot or Zimm plot; Formula 4 below), and an absolute molecular weight $M_{wi}$ at each elution time $t_i$ was calculated from the value of $\theta \rightarrow 0$ of its approximate formula. Here, K is an optical constant and is calculated from Formula 3 below. Note that dn/dc in Formula 3 is a change amount of the refractive index of the polymer solution with respect to a change in the polymer concentration, that is, a refractive index increment, but when the polymer containing a polyvinylidene fluoride-based resin as a main component is to be measured and the above-described solvent is used, a value of -0.050 mL/g can be applied as the refractive index increment.

$$K = 4\pi^2 \times n_0^2 \times (dn/dc)^2/(\lambda^4 \times N_0) \ \ldots \ (Formula\ 3)$$

$n_0$: Refractive index of solvent
dn/dc: Refractive index increment
$\lambda$: Wavelength of incident light in vacuum
$N_0$: Avogadro's number

[0077] In addition, the value of the radius of gyration $<S^2>^{1/2}$ at each elution time $t_i$ was calculated from the slope of Formula 4 below.

$$(Kc_i/R_{\theta i})^{1/2} = M_{wi}^{-1/2}\{1 + 1/6(4\pi n_0/\lambda)^2<S^2>\sin^2(\theta/2)\} \ \ldots$$

$$(Formula\ 4)$$

The absolute molecular weight $M_{wi}$ at each elution time $t_i$ calculated from Formula 4 was plotted on the x-axis and the radius of gyration $<S^2>^{1/2}$ at each elution time $t_i$ was plotted on the y-axis, and the values a and b for the polymer (specific polymer) constituting the porous resin layer were obtained by approximation with Formula 1 in the range of the molecular weight of 140,000 to 1,000,000 so as to be within the measurement range of the detector. In the approximation, Formula 1 was plotted on a log-log graph, and linear approximation was performed by applying the least squares method.

(v) Pure Water Permeability of Separation Membrane

The separation membrane was cut out into a circle having a diameter of 50 mm and set in a cylindrical filtration holder (manufactured by Advantec Toyo Kaisha, Ltd., Ultra Holder UHP-43K), distilled water was preliminarily permeated at 25°C and a pressure of 5 kPa for 5 minutes, and then permeated water was collected for 3 minutes by continuous permeation, and the amount was calculated in terms of a numerical value per unit time (h) and unit membrane area ($m^2$).

(vi) Blocking Filtration Resistance of Separation Membrane

The separation membrane was cut into a circle having a diameter of 50 mm, immersed in ethanol overnight, immersed in water for 2 hours or more for displacement, and set in a cylindrical filtration holder (manufactured by Advantec Toyo Kaisha, Ltd., Ultra Holder UHP-43K). Activated sludge (50 g) having a concentration of 7,000 mg/L was placed in the filtration holder, the stirring speed was adjusted to 450 rpm, filtration was performed at an evaluation temperature of 25°C and a membrane permeation flux converted to a daily water permeation amount (cubic meter) per 1 square meter of the membrane surface of 3.0 m$^3$/m$^2$/day for 2 minutes, and the sludge filtration resistance calculated from the amount of permeated water during the first 5 seconds of filtration was defined as Res$_{Ax}$. x represents the number of times of repeating filtration of activated sludge for 2 minutes, and x = 1 in the first filtration. Here, the filtration resistance was determined from Formula 5 below.

$$Res = P \times t \times S/(\mu \times L) \ ... \ (Formula\ 5)$$

Res: Filtration resistance
P: Evaluation pressure
t: Filtration time
S: Membrane area
$\mu$: Viscosity
L: Amount of filtered water

After the filtration was stopped, stirring was performed at a stirring speed of 450 rpm for 1 minute. The remaining activated sludge solution in the filtration holder was taken out while the separation membrane was kept in the filtration holder, the inside of the filtration holder was filled with distilled water, and stirring was performed at a stirring speed of 450 rpm for 1 minute.

Filtration for 2 minutes and membrane cleaning of the activated sludge were repeated, and Res$_{A1}$ to Res$_{A5}$ were measured. Res$_{An+1}$ - Res$_{An}$ was determined at the value n being from 1 to 4, and the average value thereof was taken as the degree of increase in blocking filtration resistance. Incidentally, it can be evaluated that the separation membrane was better in low fouling property as each value of the degree of increase in blocking filtration resistance was smaller.

(vii) Biopolymer Removability of Separation Membrane

The separation membrane was cut into a circle having a diameter of 50 mm, immersed in a 25-mass% ethanol aqueous solution overnight, immersed in water for 2 hours or more for displacement, and set in a cylindrical filtration holder (manufactured by Advantec Toyo Kaisha, Ltd., Ultra Holder UHP-43K). Activated sludge (50 g) having a concentration of 7,000 mg/L was placed in the filtration holder, the stirring speed was adjusted to 450 rpm, 20 g of the sludge was filtered at an evaluation temperature of 25°C and an evaluation pressure of 5 kPa, the biopolymer concentrations in the activated sludge and in the filtered water were measured using size exclusion liquid chromatography (manufactured by DOC-Labor GmbH, LC-OCD Model 8), and the biopolymer removal rate was determined from Formula 6 below.

$$Rej = 100 \times (1 - CP/CF) \ ... \ (Formula\ 6)$$

Rej: Biopolymer removal rate
CF: Biopolymer concentration in raw water
CP: Biopolymer concentration in filtered water

(viii) Method for Manufacturing Reverse Osmosis Membrane

A DMF solution containing 15.7 wt% of polysulfone was cast at a thickness of 200 um on a polyester nonwoven fabric (air permeability: 0.5 to 1 cc/cm$^2$/sec) at room temperature (25°C), immediately followed by immersion in pure water and leaving as it was for 5 minutes, thereby preparing a microporous supporting membrane (thickness: 210 to 215 $\mu$m). The obtained microporous supporting membrane was cut into 20 cm square, fixed to a metal frame, and immersed in a 1.8-wt% m-phenylenediamine aqueous solution as an aqueous polyfunctional amine solution for 2 minutes. The supporting film was slowly pulled up from the aqueous solution in the vertical direction, and nitrogen was blown from an air nozzle to remove the excessive aqueous solution from the surface of the supporting film. Thereafter, 25 ml of an n-decane solution at 25°C containing 0.065 wt% of trimesic acid chloride was poured into the frame so that the surface of the supporting membrane was completely wetted, and allowed to stand for 1 minute from the first contact between the n-decane solution and the supporting membrane. Next, the membrane was held vertically for 1 minute to drain and remove the excess solution from the membrane and then washed with hot water at 80°C for 2 minutes. Further, the washed membrane was immersed in a 0.3-wt% sodium nitrite aqueous solution at 35°C and pH 3 for 1 minute and then immersed in a 0.1-wt% sodium sulfite aqueous solution for 2 minutes to provide a reverse osmosis membrane.

(ix) Water Permeation Amount Retention Rate of Reverse Osmosis Membrane

The separation membrane was cut into a circle having a diameter of 50 mm, immersed in a 25-mass% ethanol aqueous solution overnight, immersed in water for 2 hours or more for displacement, and set in a cylindrical filtration holder (manufactured by Advantec Toyo Kaisha, Ltd., Ultra Holder UHP-43K). Activated sludge (50 g) having a concentration of 7,000 mg/L was placed in the filtration holder, the stirring speed was adjusted to 450 rpm, and 25 g of the sludge was filtered at an evaluation temperature of 25°C and an evaluation pressure of 5 kPa. This operation was performed twice to provide a total of 50 g of filtered water.

The reverse osmosis membrane obtained in the section (viii) was cut into a circle having a diameter of 50 mm, immersed in pure water overnight, and set in a cylindrical filtration holder (manufactured by Advantec Toyo Kaisha, Ltd., Ultra Holder UHP-43K). Then, the filtered water (50 g) of the separation membrane was placed in the filtration holder, 5 g of the filtered water was filtered at an evaluation temperature of 25°C and an evaluation pressure of 0.4 MPa, and the amount $L_1$ of permeated water during the first 1 minute and the amount $L_2$ of permeated water during the last 5 minutes in the filtration were measured to determine a water permeation amount retention rate $L_2/(5 \times L_1)$.

(Example 1)

PEG 20,000 (weight average molecular weight: 20,000) as the pore opening agent, DMF as the solvent, and methanol were added to branched polyvinylidene fluoride (branched PVDF, weight average molecular weight 730,000), and the mixture was sufficiently stirred at a temperature of 90°C to prepare a polymer solution having the following composition ratio.

Branched PVDF: 17 wt%
PEG 20,000: 9 wt%
DMF: 70 wt%
Methanol: 4 wt%

Next, the prepared polymer solution was applied to the surface of a polyester fiber nonwoven fabric having a density of 0.6 g/cm$^3$ as a support. Immediately after the application, the film was immersed in pure water at 20°C for 5 minutes to form a porous resin layer. Further, the product was immersed in hot water at 90°C for 2 minutes to wash away DMF as the solvent and PEG as the pore opening agent, thereby forming a separation membrane in which the porous resin layer had a three-dimensional network structure.

The results of evaluation of the obtained separation membrane are shown in Table 1. The value a and the value b in Formula 1 above were 0.31 and 0.47, respectively, the value of the number A of pores with a surface pore diameter of 0.01 um or more and less than 0.05 um in the porous resin layer was 201 pores/$\mu$m$^2$, the value of the number B of pores with a surface pore diameter of 0.05 um or more was 55 pores/$\mu$m$^2$, the value of A/B was 3.7, the value of the area C occupied by pores with a surface pore diameter of 0.01 um or more and less than 0.05 um in the porous resin layer was 0.043 $\mu$m$^2$-pores/$\mu$m$^2$-membrane, the value of the area D occupied by pores with a surface pore diameter of 0.05 um or more was 0.042 $\mu$m$^2$-pores/$\mu$m$^2$-membrane, the value of C/D was 1.0, the porosity defined by macrovoids in a region within 15 um from the surface of the porous resin layer was 29.9%, and the minor axis of macrovoids present in the porous resin layer was 62 um; the values of the pure water permeability as an index of water permeability, the degree of increase in blocking filtration resistance as an index of the low fouling property, and the biopolymer removal rate as an index of removal performance were all excellent.

(Example 2)

A separation membrane in which a porous resin layer had a three-dimensional network structure was formed in the same manner as in Example 1 except that ethanol was added instead of methanol.

The results of evaluation of the obtained separation membrane are shown in Table 1. The value a and the value b in Formula 1 above were 0.31 and 0.47, respectively, the value A was 182 pores/$\mu$m$^2$, the value B was 65 pores/$\mu$m$^2$, the value of A/B was 2.8, the value C was 0.044 $\mu$m$^2$-pores/$\mu$m$^2$-membrane, the value D was 0.058 $\mu$m$^2$-pores/$\mu$m$^2$-membrane, the value of C/D was 0.8, the porosity defined by macrovoids in the region within 15 um from the surface of the porous resin layer was 27.9%, and the minor axis of macrovoids present in the porous resin layer was 64 um; the values of the pure water permeability, the degree of increase in blocking filtration resistance, and the biopolymer removal rate were all excellent.

(Example 3)

A separation membrane in which a porous resin layer had a three-dimensional network structure was formed in the same manner as in Example 1 except that 1-butanol was added instead of methanol.

The results of evaluation of the obtained separation membrane are shown in Table 1. The value a and the value b in Formula 1 above were 0.31 and 0.47, respectively, the value A was 175 pores/$\mu$m$^2$, the value B was 69 pores/$\mu$m$^2$, the value of A/B was 2.5, the value C was 0.042 $\mu$m$^2$-pores/$\mu$m$^2$-membrane, the value D was 0.056 $\mu$m$^2$-pores/$\mu$m$^2$-membrane, the value of C/D was 0.7, the porosity defined by macrovoids in the region within 15 um from the surface of the porous resin layer was 30.8%, and the minor axis of macrovoids present in the porous resin layer was 72 um; the values of the pure water permeability, the degree of increase in blocking filtration resistance, and the biopolymer removal rate were all excellent.

(Example 4)

A separation membrane in which a porous resin layer had a three-dimensional network structure was formed in the same manner as in Example 1 except that isopropanol was added instead of methanol.

The results of evaluation of the obtained separation membrane are shown in Table 1. The value a and the value b in Formula 1 above were 0.31 and 0.47, respectively, the value A was 187 pores/$\mu$m$^2$, the value B was 76 pores/$\mu$m$^2$, the value of A/B was 2.5, the value C was 0.041 $\mu$m$^2$-pores/$\mu$m$^2$-membrane, the value D was 0.055 $\mu$m$^2$-pores/$\mu$m$^2$-membrane, the value of C/D was 0.7, the porosity defined by macrovoids in the region within 15 um from the surface of the porous resin layer was 22.8%, and the minor axis of macrovoids present in the porous resin layer was 68 um; the values of the pure water permeability, the degree of increase in blocking filtration resistance, and the biopolymer removal rate were all excellent.

(Example 5)

A separation membrane in which a porous resin layer had a three-dimensional network structure was formed in the same manner as in Example 3 except that NMP was used as the solvent.

The results of evaluation of the obtained separation membrane are shown in Table 2. The value a and the value b in Formula 1 above were 0.31 and 0.47, respectively, the value A was 196 pores/$\mu$m$^2$, the value B was 82 pores/$\mu$m$^2$, the value of A/B was 2.4, the value C was 0.029 $\mu$m$^2$-pores/$\mu$m$^2$-membrane, the value D was 0.043 $\mu$m$^2$-pores/$\mu$m$^2$-membrane, the value of C/D was 0.7, the porosity defined by macrovoids in the region within 15 um from the surface of the porous resin layer was 28.7%, and the minor axis of macrovoids present in the porous resin layer was 74 um; the values of the pure water permeability, the degree of increase in blocking filtration resistance, and the biopolymer removal rate were all excellent.

(Example 6)

A separation membrane in which a porous resin layer had a three-dimensional network structure was formed in the same manner as in Example 5 except that the composition of the polymer solution was as follows.

Branched PVDF: 20 wt%
PEG 20,000: 9 wt%
NMP: 67 wt%
1-Butanol: 4 wt%

The results of evaluation of the obtained separation membrane are shown in Table 2. The value a and the value b in Formula 1 above were 0.31 and 0.47, respectively, the value A was 245 pores/$\mu$m$^2$, the value B was 63 pores/$\mu$m$^2$, the value of A/B was 3.9, the value C was 0.028 $\mu$m$^2$-pores/$\mu$m$^2$-membrane, the value D was 0.029 $\mu$m$^2$-pores/$\mu$m$^2$-membrane, the value of C/D was 1.0, the porosity defined by macrovoids in the region within 15 um from the surface of the porous resin layer was 18.1%, and the minor axis of macrovoids present in the porous resin layer was 52 um; the values of the pure water permeability, the degree of increase in blocking filtration resistance, and the biopolymer removal rate were all excellent.

(Example 7)

A separation membrane in which a porous resin layer had a three-dimensional network structure was formed in the same manner as in Example 5 except that the composition of the polymer solution was as follows.

Branched PVDF: 20 wt%
PEG 20,000: 9 wt%
NMP: 63 wt%
1-Butanol: 8 wt%

The results of evaluation of the obtained separation membrane are shown in Table 2. The value a and the value b in Formula 1 above were 0.31 and 0.47, respectively, the value A was 186 pores/$\mu$m$^2$, the value B was 44 pores/$\mu$m$^2$, the value of A/B was 4.3, the value C was 0.036 $\mu$m$^2$-pores/$\mu$m$^2$-membrane, the value D was 0.028 $\mu$m$^2$-pores/$\mu$m$^2$-membrane, the value of C/D was 1.3, the porosity defined by macrovoids in the region within 15 um from the surface of the porous resin layer was 19.4%, and the minor axis of macrovoids present in the porous resin layer was 65 um; the values of the pure water permeability, the degree of increase in blocking filtration resistance, and the biopolymer removal rate were all excellent.

(Example 8)

A separation membrane in which a porous resin layer had a three-dimensional network structure was formed in the same manner as in Example 3 except that an acrylic resin (PMMA, weight average molecular weight: 100,000) was used in addition to PVDF and that the composition of the polymer solution was as follows.

Branched PVDF: 14 wt%
PMMA: 3 wt%
PEG 20,000: 9 wt%
DMF: 70 wt%
1-Butanol: 4 wt%

The results of evaluation of the obtained separation membrane are shown in Table 2. The value a and the value b in Formula 1 above were 0.31 and 0.47, respectively, the value A was 199 pores/$\mu$m$^2$, the value B was 80 pores/$\mu$m$^2$, the value of A/B was 2.5, the value C was 0.029 $\mu$m$^2$-pores/$\mu$m$^2$-membrane, the value D was 0.044 $\mu$m$^2$-pores/$\mu$m$^2$-membrane, the value of C/D was 0.7, the porosity defined by macrovoids in the region within 15 um from the surface of the porous resin layer was 29.4%, and the minor axis of macrovoids present in the porous resin layer was 69 um; the values of the pure water permeability, the degree of increase in blocking filtration resistance, and the biopolymer removal rate were all excellent.

(Example 9)

A separation membrane in which a porous resin layer had a three-dimensional network structure was formed in the same manner as in Example 1 except that H$_2$O was added instead of methanol and that polyethylene glycol monostearate (mole number of ethylene oxide added: 55, PEG-55 stearate) was added instead of PEG 20,000.

The results of evaluation of the obtained separation membrane are shown in Table 3. The value a and the value b in Formula 1 above were 0.31 and 0.47, respectively, the value A was 233 pores/$\mu$m$^2$, the value B was 78 pores/$\mu$m$^2$, the value of A/B was 3.0, the value C was 0.046 $\mu$m$^2$-pores/$\mu$m$^2$-membrane, the value D was 0.062 $\mu$m$^2$-pores/$\mu$m$^2$-membrane, the value of C/D was 0.7, the porosity defined by macrovoids in the region within 15 um from the surface of the porous resin layer was 27.3%, and the minor axis of macrovoids present in the porous resin layer was 71 um; the values of the pure water permeability, the degree of increase in blocking filtration resistance, and the biopolymer removal rate were all excellent.

(Example 10)

A separation membrane in which a porous resin layer had a three-dimensional network structure was formed in the same manner as in Example 1 except that H$_2$O was added instead of methanol and that polyethylene glycol monostearate (mole number of ethylene oxide added: 40, PEG-55 stearate) was added instead of PEG 20,000.

The results of evaluation of the obtained separation membrane are shown in Table 3. The value a and the value b in Formula 1 above were 0.31 and 0.47, respectively, the value A was 209 pores/$\mu$m$^2$, the value B was 81 pores/$\mu$m$^2$, the value of A/B was 2.6, the value C was 0.039 $\mu$m$^2$-pores/$\mu$m$^2$-membrane, the value D was 0.064 $\mu$m$^2$-pores/$\mu$m$^2$-membrane, the value of C/D was 0.6, the porosity defined by macrovoids in the region within 15 um from the surface of the porous resin layer was 23.8%, and the minor axis of macrovoids present in the porous resin layer was 65 um; the values of the pure water permeability, the degree of increase in blocking filtration resistance, and the biopolymer removal rate were all excellent.

(Example 11)

A separation membrane in which a porous resin layer had a three-dimensional network structure was formed in the same manner as in Example 1 except that glycerin was added instead of methanol.

The results of evaluation of the obtained separation membrane are shown in Table 3. The value a and the value b in Formula 1 above were 0.31 and 0.47, respectively, the value A was 215 pores/$\mu$m$^2$, the value B was 91 pores/$\mu$m$^2$, the value of A/B was 2.4, the value C was 0.044 $\mu$m$^2$-pores/$\mu$m$^2$-membrane, the value D was 0.077 $\mu$m$^2$-pores/$\mu$m$^2$-membrane, the value of C/D was 0.6, the porosity defined by macrovoids in the region within 15 um from the surface of the porous resin layer was 19.2%, and the minor axis of macrovoids present in the porous resin layer was 56 um; the values of the pure water permeability, the degree of increase in blocking filtration resistance, and the biopolymer removal rate were all excellent.

(Example 12)

A separation membrane in which a porous resin layer had a three-dimensional network structure was formed in the same manner as in Example 9 except that linear PVDF (weight average molecular weight: 280,000) was added instead of branched PVDF.

The results of evaluation of the obtained separation membrane are shown in Table 3. The value a and the value b in Formula 1 above were 0.42 and 0.16, respectively, the value A was 163 pores/$\mu$m$^2$, the value B was 17 pores/$\mu$m$^2$, the value of A/B was 9.6, the value C was 0.029 $\mu$m$^2$-pores/$\mu$m$^2$-membrane, the value D was 0.015 $\mu$m$^2$-pores/$\mu$m$^2$-membrane, the value of C/D was 1.9, the porosity defined by macrovoids in the region within 15 $\mu$m from the surface of the porous resin layer was 15.2%, and the minor axis of macrovoids present in the porous resin layer was 52 um; the values of the pure water permeability, the degree of increase in blocking filtration resistance, and the biopolymer removal rate were all excellent.

(Example 13)

A separation membrane in which a porous resin layer had a three-dimensional network structure was formed in the same manner as in Example 10 except that linear PVDF (weight average molecular weight: 280,000) was added instead of branched PVDF.

The results of evaluation of the obtained separation membrane are shown in Table 4. The value a and the value b in Formula 1 above were 0.42 and 0.16, respectively, the value A was 156 pores/$\mu$m$^2$, the value B was 18 pores/$\mu$m$^2$, the value of A/B was 8.7, the value C was 0.026 $\mu$m$^2$-pores/$\mu$m$^2$-membrane, the value D was 0.016 $\mu$m$^2$-pores/$\mu$m$^2$-membrane, the value of C/D was 1.6, the porosity defined by macrovoids in the region within 15 $\mu$m from the surface of the porous resin layer was 15.2%, and the minor axis of macrovoids present in the porous resin layer was 50 um; the values of the pure water permeability, the degree of increase in blocking filtration resistance, and the biopolymer removal rate were all excellent.

(Example 14)

A separation membrane in which a porous resin layer had a three-dimensional network structure was formed in the same manner as in Example 11 except that linear PVDF (weight average molecular weight: 280,000) was added instead of branched PVDF.

The results of evaluation of the obtained separation membrane are shown in Table 4. The value a and the value b in Formula 1 above were 0.42 and 0.16, respectively, the value A was 179 pores/$\mu$m$^2$, the value B was 34 pores/$\mu$m$^2$, the value of A/B was 5.3, the value C was 0.036 $\mu$m$^2$-pores/$\mu$m$^2$-membrane, the value D was 0.021 $\mu$m$^2$-pores/$\mu$m$^2$-membrane, the value of C/D was 1.7, the porosity defined by macrovoids in the region within 15 um from the surface of the porous resin layer was 15.5%, and the minor axis of macrovoids present in the porous resin layer was 53 um; the values of the pure water permeability, the degree of increase in blocking filtration resistance, and the biopolymer removal rate were all excellent.

(Comparative Example 1)

A separation membrane in which a porous resin layer had a three-dimensional network structure was formed in the same manner as in Example 1 except that linear PVDF (weight average molecular weight: 280,000) was added instead of branched PVDF.

The results of evaluation of the obtained separation membrane are shown in Table 5. The value a and the value b in Formula 1 above were 0.42 and 0.16, respectively, the value A was 126 pores/$\mu$m$^2$, the value B was 99

pores/$\mu$m$^2$, the value of A/B was 1.3, the value C was 0.026 $\mu$m$^2$-pores/$\mu$m$^2$-membrane, the value D was 0.112 $\mu$m$^2$-pores/$\mu$m$^2$-membrane, the value of C/D was 0.2, the porosity defined by macrovoids in the region within 15 um from the surface of the porous resin layer was 9.3%, and the minor axis of macrovoids present in the porous resin layer was 33 um; the degree of increase in blocking filtration resistance and the biopolymer removal rate were inferior to the results in the examples.

(Comparative Example 2)

A separation membrane in which a porous resin layer had a three-dimensional network structure was formed in the same manner as in Example 1 except that $H_2O$ was added instead of methanol.

The results of evaluation of the obtained separation membrane are shown in Table 5. The value a and the value b in Formula 1 above were 0.31 and 0.47, respectively, the value A was 89 pores/$\mu$m$^2$, the value B was 93 pores/$\mu$m$^2$, the value of A/B was 1.0, the value C was 0.021 $\mu$m$^2$-pores/$\mu$m$^2$-membrane, the value D was 0.103 $\mu$m$^2$-pores/$\mu$m$^2$-membrane, the value of C/D was 0.2, the porosity defined by macrovoids in the region within 15 um from the surface of the porous resin layer was 29.6%, and the minor axis of macrovoids present in the porous resin layer was 78 um; the degree of increase in blocking filtration resistance and the biopolymer removal rate were inferior to the results in the examples.

(Comparative Example 3)

A separation membrane in which a porous resin layer had a three-dimensional network structure was formed in the same manner as in Example 1 except that 1-octanol was added instead of methanol.

The results of evaluation of the obtained separation membrane are shown in Table 5. The value a and the value b in Formula 1 above were 0.31 and 0.47, respectively, the value A was 117 pores/$\mu$m$^2$, the value B was 66 pores/$\mu$m$^2$, the value of A/B was 1.8, the value C was 0.030 $\mu$m$^2$-pores/$\mu$m$^2$-membrane, the value D was 0.058 $\mu$m$^2$-pores/$\mu$m$^2$-membrane, the value of C/D was 0.5, the porosity defined by macrovoids in the region within 15 um from the surface of the porous resin layer was 30.1%, and the minor axis of macrovoids present in the porous resin layer was 74 um; the degree of increase in blocking filtration resistance and the biopolymer removal rate were inferior to the results in the examples.

(Comparative Example 4)

A separation membrane in which a porous resin layer had a three-dimensional network structure was formed in the same manner as in Example 1 except that $H_2O$ was added instead of methanol and that PEG 100,000 (weight average molecular weight: 100,000) was used instead of PEG 20,000.

The results of evaluation of the obtained separation membrane are shown in Table 5. The value a and the value b in Formula 1 above were 0.31 and 0.47, respectively, the value A was 206 pores/$\mu$m$^2$, the value B was 51 pores/$\mu$m$^2$, the value of A/B was 4.0, the value C was 0.038 $\mu$m$^2$-pores/$\mu$m$^2$-membrane, the value D was 0.018 $\mu$m$^2$-pores/$\mu$m$^2$-membrane, the value of C/D was 2.1, the porosity defined by macrovoids in the region within 15 $\mu$m from the surface of the porous resin layer was 1.4%, and the minor axis of macrovoids present in the porous resin layer was 69 um; the pure water permeability was inferior to the results in the examples.

(Comparative Example 5)

A separation membrane in which a porous resin layer had a three-dimensional network structure was formed in the same manner as in Example 1 except that $H_2O$ was added instead of methanol and that polyethylene glycol monooleate (mole number of ethylene oxide added: 9, PEG-9 oleate) was added instead of PEG 20,000.

The results of evaluation of the obtained separation membrane are shown in Table 6. The value a and the value b in Formula 1 above were 0.31 and 0.47, respectively, the value A was 34 pores/$\mu$m$^2$, the value B was 51 pores/$\mu$m$^2$, the value of A/B was 0.7, the value C was 0.006 $\mu$m$^2$-pores/$\mu$m$^2$-membrane, the value D was 0.104 $\mu$m$^2$-pores/$\mu$m$^2$-membrane, the value of C/D was 0.1, the porosity defined by macrovoids in the region within 15 um from the surface of the porous resin layer was 5.8%, and the minor axis of macrovoids present in the porous resin layer was 21 um; the degree of increase in blocking filtration resistance and the biopolymer removal rate were inferior to the results in the examples.

(Comparative Example 6)

A separation membrane in which a porous resin layer had a three-dimensional network structure was formed in the same manner as in Example 12 except that polyethylene glycol monooleate (mole number of ethylene oxide added: 9, PEG-9 oleate) was added instead of PEG-55 stearate.

The results of evaluation of the obtained separation membrane are shown in Table 6. The value a and the value b in Formula 1 above were 0.42 and 0.16, respectively, the value A was 20 pores/$\mu$m$^2$, the value B was 43 pores/$\mu$m$^2$, the value of A/B was 0.5, the value C was 0.003 $\mu$m$^2$-pores/$\mu$m$^2$-membrane, the value D was 0.089 $\mu$m$^2$-pores/$\mu$m$^2$-membrane, the value of C/D was 0.0, the porosity defined by macrovoids in the region within 15 um from the surface of the porous resin layer was 4.4%, and the minor axis of macrovoids present in the porous resin layer was 16 um; the degree of increase in blocking filtration resistance and the biopolymer removal rate were inferior to the results in the examples.

(Example 15, Example 16, and Comparative Example 7)

The water permeation amount retention rate of a reverse osmosis membrane was evaluated using the filtered water of the separation membranes described in Example 1, Example 12, and Comparative Example 1.

The water permeation amount retention rate of a reverse osmosis membrane was 0.62 when the filtered water of the separation membrane of Example 1 was used, the water permeation amount retention rate of a reverse osmosis membrane was 0.63 when the filtered water of the separation membrane of Example 1 was used, and the water permeation amount retention rate of a reverse osmosis membrane was 0.33 when the filtered water of the separation membrane of Comparative Example 1 was used. Therefore, the water permeation amount retention rate of a reverse osmosis membrane was superior when the filtered water of the separation membranes of Example 1 and Example 12 was used.

[Table 1]

| | Unit | Example 1 | Example 2 | Example 3 | Example 4 |
|---|---|---|---|---|---|
| Composition of polymer solution | - | Branched PVDF: 17 wt% PEG 20,000: 9 wt% DMF: 70 wt% Methanol: 4 wt% | Branched PVDF: 17 wt% PEG 20,000: 9 wt% DMF: 70 wt% Ethanol: 4 wt% | Branched PVDF: 17 wt% PEG 20,000: 9 wt% DMF: 70 wt% 1-Butanol: 4 wt% | Branched PVDF: 17 wt% PEG 20,000: 9 wt% DMF: 70 wt% Isopropanol: 4 wt% |
| Polymer composition ratio | wt% | PVDF = 100 | PVDF = 100 | PVDF = 100 | PVDF = 100 |
| Value A | pores/$\mu$m$^2$ | 201 | 182 | 175 | 187 |
| Value B | pores/$\mu$m$^2$ | 55 | 65 | 69 | 76 |
| Value of A/B | - | 3.7 | 2.8 | 2.5 | 2.5 |
| Value C | $\mu$m$^2$-pores/ $\mu$m$^2$-membrane | 0.043 | 0.044 | 0.042 | 0.041 |
| Value D | $\mu$m$^2$-pores/ $\mu$m$^2$-membrane | 0.042 | 0.058 | 0.056 | 0.055 |
| Value of C/D | - | 1.0 | 0.8 | 0.7 | 0.7 |
| Porosity defined by macrovoids in region within 15 $\mu$m from surface | % | 29.9 | 27.9 | 30.8 | 22.8 |
| Minor axis of macrovoid present in porous resin layer | $\mu$m | 62 | 64 | 72 | 68 |
| Value a in Formula 1 | - | 0.31 | 0.31 | 0.31 | 0.31 |
| Value b in Formula 1 | - | 0.47 | 0.47 | 0.47 | 0.47 |
| Pure water permeability | m$^2$/m$^2$/hr | 0.92 | 0.84 | 0.96 | 0.78 |

(continued)

|  | Unit | Example 1 | Example 2 | Example 3 | Example 4 |
|---|---|---|---|---|---|
| Degree of increase in blocking filtration resistance | $10^{10}$/m | 37 | 43 | 51 | 53 |
| Biopolymer removal rate | % | 65 | 57 | 41 | 41 |

[Table 2]

|  | Unit | Example 5 | Example 6 | Example 7 | Example 8 |
|---|---|---|---|---|---|
| Composition ratio of polymer solution | - | Branched PVDF: 17 wt%<br>PEG 20,000: 9 wt%<br>NMP: 70 wt%<br>1-Butanol: 4 wt% | Branched PVDF: 20 wt%<br>PEG 20,000: 9 wt%<br>NMP: 67 wt%<br>1-Butanol: 4 wt% | Branched PVDF: 20 wt%<br>PEG 20,000: 9 wt%<br>NMP: 63 wt%<br>1-Butanol: 8 wt% | Branched PVDF: 14 wt%<br>PMMA: 3 wt%<br>PEG 9 wt%20,000:<br>NMP: 70 wt%<br>1-Butanol: 4 wt% |
| Polymer composition ratio | wt% | PVDF = 100 | PVDF = 100 | PVDF = 100 | PVDF/ PMMA = 82/18 |
| Value A | pores/$\mu$m$^2$ | 196 | 245 | 186 | 199 |
| Value B | pores/$\mu$m$^2$ | 82 | 63 | 44 | 80 |
| Value of A/B | - | 2.4 | 3.9 | 4.3 | 2.5 |
| Value C | $\mu$m$^2$-pores/ $\mu$m$^2$-membrane | 0.029 | 0.028 | 0.036 | 0.029 |
| Value D | $\mu$m$^2$-pores/ $\mu$m$^2$-membrane | 0.043 | 0.029 | 0.028 | 0.044 |
| Value of C/D | - | 0.7 | 1.0 | 1.3 | 0.7 |
| Porosity defined by macrovoids in region within 15 $\mu$m from surface | % | 28.7 | 18.1 | 19.4 | 29.4 |
| Minor axis of macrovoid present in porous resin layer | $\mu$m | 74 | 52 | 65 | 69 |
| Value a in Formula 1 | - | 0.31 | 0.31 | 0.31 | 0.31 |
| Value b in Formula 1 | - | 0.47 | 0.47 | 0.47 | 0.47 |
| Pure water permeability | m$^3$/m$^2$/hr | 0.72 | 0.37 | 0.48 | 0.99 |
| Degree of increase in blocking filtration resistance | $10^{10}$/m | 50 | 43 | 39 | 61 |
| Biopolymer removal rate | % | 43 | 51 | 62 | 42 |

[Table 3]

| | Unit | Example 9 | Example 10 | Example 11 | Example 12 |
|---|---|---|---|---|---|
| Composition ratio of polymer solution | - | Branched PVDF: 17 wt%<br><br>PEG-55 stearate: 9 wt%<br><br>DMF: 70 wt%<br><br>$H_2O$: 4 wt% | Branched PVDF: 17 wt%<br><br>PEG-40 stearate: 9 wt%<br><br>DMF: 70 wt%<br><br>$H_2O$: 4 wt% | Branched PVDF: 17 wt%<br><br>PEG 20,000: 9 wt%<br><br>DMF: 70 wt%<br>Glycerin: 4 wt% | Linear PVDF: 17 wt%<br><br>PEG-55 stearate: 9 wt%<br><br>DMF: 70 wt%<br><br>$H_2O$: 4 wt% |
| Polymer composition ratio | wt% | PVDF = 100 | PVDF = 100 | PVDF = 100 | PVDF = 100 |
| Value A | pores/$\mu m^2$ | 233 | 209 | 215 | 163 |
| Value B | pores/$\mu m^2$ | 78 | 81 | 91 | 17 |
| Value of A/B | - | 3.0 | 2.6 | 2.4 | 9.6 |
| Value C | $\mu m^2$-pores/ $\mu m^2$-membrane | 0.046 | 0.039 | 0.044 | 0.029 |
| Value D | $\mu m^2$-pores/ $\mu m^2$-membrane | 0.062 | 0.064 | 0.077 | 0.015 |
| Value of C/D | - | 0.7 | 0.6 | 0.6 | 1.9 |
| Porosity defined by macrovoids in region within 15 $\mu m$ from surface | % | 27.3 | 23.8 | 19.2 | 15.2 |
| Minor axis of macrovoid present in porous resin layer | $\mu m$ | 71 | 65 | 56 | 52 |
| Value a in Formula 1 | - | 0.31 | 0.31 | 0.31 | 0.42 |
| Value b in Formula 1 | - | 0.47 | 0.47 | 0.47 | 0.16 |
| Pure water permeability | $m^3/m^2$/hr | 0.76 | 0.69 | 0.41 | 0.38 |
| Degree of increase in blocking filtration resistance | $10^{10}$/m | 43 | 47 | 45 | 57 |
| Biopolymer removal rate | % | 47 | 47 | 52 | 67 |

[Table 4]

| | Unit | Example 13 | Example 14 |
|---|---|---|---|
| Composition ratio of polymer solution | - | Linear PVDF: 17 wt%<br>PEG-40 stearate: 9 wt%<br>DMF: 70 wt%<br>$H_2O$: 4 wt% | Linear PVDF: 17 wt%<br>PEG 20,000: 9 wt%<br>DMF: 70 wt%<br>Glycerin: 4 wt% |
| Polymer composition ratio | wt% | PVDF = 100 | PVDF = 100 |

(continued)

|  | Unit | Example 13 | Example 14 |
|---|---|---|---|
| Value A | pores/$\mu$m$^2$ | 156 | 179 |
| Value B | pores/$\mu$m$^2$ | 18 | 34 |
| Value of A/B | - | 8.7 | 5.3 |
| Value C | $\mu$m$^2$-pores/ $\mu$m$^2$-membrane | 0.026 | 0.036 |
| Value D | $\mu$m$^2$-pores/ $\mu$m$^2$-membrane | 0.016 | 0.021 |
| Value of C/D | - | 1.6 | 1.7 |
| Porosity defined by macrovoids in region within 15 $\mu$m from surface | % | 15.2 | 15.5 |
| Minor axis of macrovoid present in porous resin layer | $\mu$m | 50 | 53 |
| Value a in Formula 1 | - | 0.42 | 0.42 |
| Value b in Formula 1 | - | 0.16 | 0.16 |
| Pure water permeability | m$^3$/m$^2$/hr | 0.37 | 0.36 |
| Degree of increase in blocking filtration resistance | 10$^{10}$/m | 52 | 55 |
| Biopolymer removal rate | % | 66 | 59 |

[Table 5]

|  | Unit | Comparative Example 1 | Comparative Example 2 | Comparative Example 3 | Comparative Example 4 |
|---|---|---|---|---|---|
| Composition ratio of polymer solution | - | Linear PVDF: 17 wt% PEG 20,000: 9 wt% DMF: 70 wt% Methanol: 4 wt% | Branched PVDF: 17 wt% PEG 20,000: 9 wt% DMF: 70 wt% H$_2$O: 4 wt% | Branched PVDF: 17 wt% PEG 20,000: 9 wt% DMF: 70 wt% 1-Octanol: 4 wt% | Branched PVDF: 17 wt% PEG 100,000: 9 wt% DMF: 70 wt% H$_2$O: 4 wt% |
| Polymer composition ratio | wt% | PVDF = 100 | PVDF = 100 | PVDF = 100 | PVDF = 100 |
| Value A | pores/$\mu$m$^2$ | 126 | 89 | 117 | 206 |
| Value B | pores/$\mu$m$^2$ | 99 | 93 | 66 | 51 |
| Value of A/B | - | 1.3 | 1.0 | 1.8 | 4.0 |
| Value C | $\mu$m$^2$-pores/ $\mu$m$^2$-membrane | 0.026 | 0.021 | 0.030 | 0.038 |
| Value D | $\mu$m$^2$-pores/ $\mu$m$^2$-membrane | 0.112 | 0.103 | 0.058 | 0.018 |
| Value of C/D | - | 0.2 | 0.2 | 0.5 | 2.1 |
| Porosity defined by macrovoids in region within 15 $\mu$m from surface | % | 9.3 | 29.6 | 30.1 | 1.4 |

(continued)

| | Unit | Comparative Example 1 | Comparative Example 2 | Comparative Example 3 | Comparative Example 4 |
|---|---|---|---|---|---|
| Minor axis of macrovoid present in porous resin layer | $\mu$m | 33 | 78 | 74 | 69 |
| Value a in Formula 1 | - | 0.42 | 0.31 | 0.31 | 0.31 |
| Value b in Formula 1 | - | 0.16 | 0.47 | 0.47 | 0.47 |
| Pure water permeability | $m^3/m^2$/hr | 0.84 | 0.95 | 0.90 | 0.06 |
| Degree of increase in blocking filtration resistance | $10^{10}$/m | 99 | 81 | 77 | 28 |
| Biopolymer removal rate | % | 24 | 25 | 26 | 67 |

[Table 6]

| | Unit | Comparative Example 5 | Comparative Example 6 |
|---|---|---|---|
| Composition ratio of polymer solution | - | Branched PVDF: 17 wt%<br><br>PEG-9 oleate: 9 wt%<br><br>DMF: 70 wt%<br>$H_2O$: 4 wt% | Linear PVDF: 17 wt%<br><br>PEG-9 oleate: 9 wt%<br><br>DMF: 70 wt%<br>$H_2O$: 4 wt% |
| Polymer composition ratio | wt% | PVDF = 100 | PVDF = 100 |
| Value A | pores/$\mu$m$^2$ | 34 | 20 |
| Value B | pores/$\mu$m$^2$ | 51 | 43 |
| Value of A/B | | 0.7 | 0.5 |
| Value C | $\mu$m$^2$-pores/ $\mu$m$^2$-membrane | 0.006 | 0.003 |
| Value D | $\mu$m$^2$-pores/ $\mu$m$^2$-membrane | 0.104 | 0.089 |
| Value of C/D | - | 0.1 | 0.0 |
| Porosity defined by macrovoids in region within 15 $\mu$m from surface | % | 5.8 | 4.4 |
| Minor axis of macrovoid present in porous resin layer | $\mu$m | 21 | 16 |
| Value a in Formula 1 | - | 0.31 | 0.42 |
| Value b in Formula 1 | - | 0.47 | 0.16 |
| Pure water permeability | $m^3/m^2$/hr | 0.34 | 0.23 |
| Degree of increase in blocking filtration resistance | $10^{10}$/m | 92 | 151 |
| Biopolymer removal rate | % | 21 | 15 |

INDUSTRIAL APPLICABILITY

The separation membrane according to the present invention is excellent in the low fouling property, separation performance, and water permeability while securing high chemical resistance and thus is suitable for use in various fields such as water treatment fields such as water purification and wastewater treatment, medical fields such as blood purification, and food industry fields.

**Claims**

1. A separation membrane comprising a porous resin layer containing a polymer containing a polyvinylidene fluoride-based resin as a main component,
   wherein

   in the porous resin layer, a number A of pores having a surface pore diameter of 0.01 um or more and less than 0.05 um and a number B of pores having a surface pore diameter of 0.05 um or more have a relationship of $2.0 \leq A/B \leq 15.0$, and
   a porosity defined by macrovoids having a minor axis of 10 um or more in a region within 15 um from a surface of the porous resin layer is 15% or more and 80% or less.

2. The separation membrane according to claim 1, wherein the number A and the number B have a relationship of $A/B \geq 2.5$.

3. The separation membrane according to claim 2, wherein the number B is less than 40 pores/$\mu$m$^2$.

4. The separation membrane according to any one of claims 1 to 3, wherein a porosity defined by the macrovoids in the region within 15 um from the surface of the porous resin layer is 25% or more.

5. The separation membrane according to any one of claims 1 to 4, wherein in the porous resin layer, an area C occupied by pores having a surface pore diameter of 0.01 um or more and less than 0.05 um and an area D occupied by pores having a surface pore diameter of 0.05 um or more have a relationship of $C/D \geq 0.6$.

6. The separation membrane according to claim 5, wherein the area C and the area D have a relationship of $C/D \geq 0.8$.

7. The separation membrane according to claim 6, wherein the area D is less than 0.025 $\mu$m$^2$-pores/$\mu$m$^2$-membrane.

8. The separation membrane according to any one of claims 1 to 7, wherein a macrovoid having a minor axis of 50 um or more is present in the porous resin layer.

9. The separation membrane according to any one of claims 1 to 8, comprising:

   the porous resin layer; and
   a support.

10. A method for manufacturing the separation membrane according to any one of claims 1 to 9, the method comprising:

    (i) a polymer solution adjusting step of using a polymer containing a polyvinylidene fluoride-based resin as a main component, glycerin, a pore opening agent, and a solvent and dissolving the polymer containing a polyvinylidene fluoride-based resin as a main component to provide a polymer solution; and
    (ii) a porous resin layer forming step of coagulating the polymer solution in a coagulation bath containing a non-solvent to form a porous resin layer.

11. A method for manufacturing the separation membrane according to any one of claims 1 to 9, the method comprising:

    (i) a polymer solution adjusting step of using a polymer containing a polyvinylidene fluoride-based resin as a main component, a non-solvent, a pore opening agent being a surfactant with a mole number of ethylene oxide added of 30 or more, and a solvent and dissolving the polymer containing a polyvinylidene fluoride-based resin as a main component to provide a polymer solution; and

(ii) a porous resin layer forming step of coagulating the polymer solution in a coagulation bath containing a non-solvent to form a porous resin layer.

**12.** A method for manufacturing the separation membrane according to any one of claims 1 to 9, the method comprising:

(i) a polymer solution adjusting step of using a polymer containing a polyvinylidene fluoride-based resin as a main component, an alcohol, a pore opening agent, and a solvent and dissolving the polymer containing a polyvinylidene fluoride-based resin as a main component to provide a polymer solution; and
(ii) a porous resin layer forming step of coagulating the polymer solution in a coagulation bath containing a non-solvent to form a porous resin layer,

wherein as the polymer containing a polyvinylidene fluoride-based resin as a main component, a polymer having a value a of 0.27 to 0.39 and a value b of 0.22 to 0.60, the values a and b being determined by approximation by Formula 1 below from a radius of gyration $<S^2>^{1/2}$ and an absolute molecular weight $M_w$ of the polymer measured by gel permeation chromatography with multi-angle light scattering (GPC-MALS), is used:

$$<S^2>^{1/2} = bM_w{}^a \quad ... \quad (\text{Formula 1}).$$

【Fig.1】

# EP 4 349 461 A1

| INTERNATIONAL SEARCH REPORT | International application No. |
|---|---|
| | **PCT/JP2022/018864** |

**A.    CLASSIFICATION OF SUBJECT MATTER**

*B01D 61/18*(2006.01)i; *B01D 69/00*(2006.01)i; *B01D 69/02*(2006.01)i; *B01D 69/10*(2006.01)i; *B01D 69/12*(2006.01)i; *B01D 71/34*(2006.01)i; *C02F 3/12*(2006.01)i; *C02F 1/44*(2006.01)i
FI:    B01D71/34; B01D69/00; B01D69/02; B01D69/10; B01D69/12; B01D61/18; C02F1/44 F; C02F3/12 S

According to International Patent Classification (IPC) or to both national classification and IPC

**B.    FIELDS SEARCHED**

Minimum documentation searched (classification system followed by classification symbols)

B01D61/18; B01D69/00; B01D69/02; B01D69/10; B01D69/12; B01D71/34; C02F3/12; C02F1/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2010-221218 A (TORAY INDUSTRIES) 07 October 2010 (2010-10-07) claims, paragraphs [0008], [0013]-[0015], [0022], [0042]-[0073] | 1-10 |
| Y | | 11-12 |
| X | JP 2007-283287 A (TORAY INDUSTRIES) 01 November 2007 (2007-11-01) claims, paragraphs [0017], [0020]-[0022], [0028]-[0039], [0064]-[0130] | 1-11 |
| Y | | 11-12 |
| Y | JP 2020-104104 A (TORAY INDUSTRIES) 09 July 2020 (2020-07-09) paragraphs [0015]-[0018], [0033]-[0036], [0084]-[0110] | 12 |

☐ Further documents are listed in the continuation of Box C.         ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 July 2022** | **12 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/018864**

| Patent document cited in search report | | | Publication date (day/month/year) | Patent family member(s) | Publication date (day/month/year) |
|---|---|---|---|---|---|
| JP | 2010-221218 | A | 07 October 2010 | US    2003/0150808    A1<br>claims, paragraphs [0009], [0025]-[0027], [0037], [0060]-[0093]<br>WO    2002/064240    A1<br>EP    1371409    A1<br>CN    1457268    A<br>KR  10-2008-0091519    A | |
| JP | 2007-283287 | A | 01 November 2007 | (Family: none) | |
| JP | 2020-104104 | A | 09 July 2020 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5310658 B
- WO 2016510688 A